Europäisches Patentamt

European Patent Office

Office européen des brevets

(11) Publication number: 0 249 393
A2

# EUROPEAN PATENT APPLICATION

(21) Application number: 87304932.4

(51) Int. Cl.⁴: **F02K 9/62**

(22) Date of filing: 03.06.87

(30) Priority: 04.06.86 GB 8613472

(43) Date of publication of application:
16.12.87 Bulletin 87/51

(84) Designated Contracting States:
DE FR GB SE

(71) Applicant: **Royal Ordnance plc**
**Griffin House 5 The Strand**
**London WC2N 5BB(GB)**

(72) Inventor: **Klepping, Anthony Herbert, Dr.**
**7, Hawthorn Drive**
**Brackley Northants NN13 5TZ(US)**
Inventor: **Paul, Malcolm Frederick**
**65, Thame Road**
**Haddenham Bucks HP17 8EP(GB)**
Inventor: **Evans, Christopher Charles, Dr.**
**Cothelstone Debdan Road**
**Newport Essex CB11 3RU(GB)**
Inventor: **Jackman, Paul Eric**
**1 Darleys Close Grendon Underwood**
**Aylesbury Bucks HP18 0SE(GB)**

(74) Representative: **McCormack, Derek James et al**
**c/o Patents and Licensing Department Royal Ordnance plc Griffin House PO Box 288 5 The Strand**
**London WC2N 5BB(GB)**

(54) Components for rocket engine combustion chambers.

(57) A method of producing an insert for the thrust chamber assembly of a rocket engine which comprises forming an insert component comprising a carbon containing material and chemically converting the carbon of the said component into silicon carbide in at least the region of the said component which forms the inner wall of the thrust chamber assembly of the engine when the assembly is located in the engine.

## COMPONENTS FOR ROCKET ENGINE COMBUSTION CHAMBERS

Rocket engines, especially ablatively cooled liquid propellant rocket engines, are presently used in a number of important tactical and strategic applications and offer both simplicity of design and high reliability. One major problem that is encountered with such engines however is that of degradation of the nozzle region of the combustion chamber and cone by propellant constituents and combustion products.

The choice of material for the nozzle region of ablatively cooled engines has long been a particularly difficult one to make in view of the severe environment that normally exists in this region. Historically solutions have been found that centre on the use of refractory materials, both metals and non-metals, where the nozzle may comprise a single material, several materials in discrete sections, or intimate mixtures of materials. Each solution offers a number of advantages and disadvantages in terms of its ability to withstand the major failure modes, viz, chemical oxidation, erosion, melting and thermal shock effects, but in almost every case high cost emerges as a feature of the final design.

One exception is graphite, yet even in this case the erosion resistance is a strong function of the density and porosity of the material, leading to the use of the more expensive high density grades. No matter how dense the grade of graphite this material is nevertheless still susceptible to severe oxidation and erosion under some circumstances.

Nozzles constructed from some forms of silicon carbide on the other hand can offer good oxidation and erosion resistance but suffer from greater weight and cost together with poor resistance to thermal shock. Attempts to draw together the desirable features of graphite and silicon carbide and avoid the less desirable features have been made in the past. Indeed the concept of a layer of silicon carbide on the surface of another material in a rocket nozzle application dates back at least to the mid-1940s. Previously however the silicon carbide has been formed as a separate deposited layer by, for example, chemical deposition or plasma spraying. Generally speaking, components manufactured using these techniques have met with only limited success. The resistance of the silicon carbide layer to thermal shock cracking and spalling has not been satisfactory.

According to the present invention in a first aspect there is provided a method of producing an insert for the thrust chamber assembly of a rocket engine which comprises forming an insert component comprising a carbon-containing material and chemically converting the carbon of said component into silicon carbide in at least the region of the said component which forms the inner wall of the thrust chamber assembly of the engine when the component is located in the engine.

The insert component may for example comprise a combustion zone or chamber lining, a nozzle and/or an expansion cone.

The insert component prior to chemical conversion may comprise graphite or especially a carbon-carbon composite, viz a carbon-fibre reinforced composite in which the matrix comprises an organic material, e.g. an epoxy or polyphenylene resin, which has been carbonised.

The component may additionally comprise other elements in elemental or compound form to further improve the erosion resistance, e.g. aluminium, boron and nitrogen.

The process of chemical conversion of the carbon of the said component may be a known process per se and may for example comprise heating the carbon in an atmosphere of silicon monoxide, e.g. at a temperature of 1600°C to 1900°C, e.g. obtained by heating silicon carbide and silica.

According to the present invention in a second aspect there is provided an insert component produced by the method according to the first aspect.

We have found that the method according to the first aspect whilst providing an inexpensive solution to the problem of high erosion rates found with graphite combustion zone inserts also unexpectedly provides a reduction in the tendency of SiC to crack owing to thermal shock effects and to spall during operation of the engine as compared with combustion zone components comprising a silicon carbide layer deposited on graphite.

The engine in which the insert is used may comprise a solid or liquid propellant combustion engine preferably in which the propellant is burnt at a temperature of 2350°C to 2700°C. This temperature may be achieved using water or other fluid-assisted cooling or by ablative cooling.

A combination of cooling and a reduction in the oxidising nature of the combustion products may be obtained by injecting propellant fuel along the internal walls of the combustion chamber in a known way.

The propellant may for example be any known bipropellant providing erosive combustion gases, or unburnt constituents.

The propellant may comprise any of the bipropellants well known to those skilled in the art. For example, it may comprise a known mixture comprising fuming nitric acid and a hydrazine/ or hydrazine derivative/ amine mixture. For instance, it may comprise the mixture IRFNA-MAF-1 as described below. Alternatively, the bipropellant may comprise a known mixture of dinitrogen tetroxide and hydrazine or a derivative thereof.

The minimum inner wall diameter of the insert may for example be in the range 20 mm to 100 mm.

The depth of the layer of the said insert component which is converted into silicon carbide may for example be from 0.5 mm to 5 mm, e.g. from 0.8 mm to 3.5 mm.

Preferably, where the said insert component comprises a carbon-carbon composite prior to said chemical conversion, 50 to 90 per cent by volume, e.g. 70 to 80 per cent by volume, of the composite is converted into SiC, thereby optimising the combination of erosion resistance and flexural strength of the component. Preferably such a composite is chemically converted at a temperature of from 1650°C to 1750°C using an atmosphere of silicon monoxide.

Embodiments of the present invention will now be described by way of example with reference to the accompanying drawings, in which:

Figure 1 is a cross-sectional side elevation of an ablatively cooled combustion chamber of a liquid bipropellant rocket motor.

Figure 2 is a cross-sectional side elevation of a water cooled combustion chamber of a liquid bipropellant rocket motor.

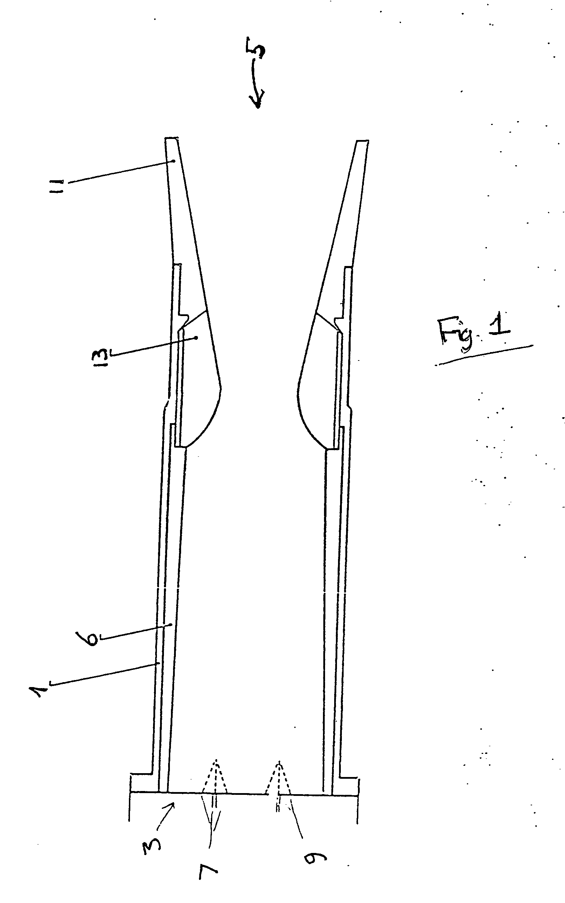

Figure 1 illustrates a combustion chamber construction in which a variety of novel insert components embodying the invention have been demonstrated.

The construction comprises a metal casing 1 having a generally closed end 3 and an open end 5. Injectors 7, 9 inject a liquid bipropellant mixture into the chamber at the closed end 3. The casing 1 has an internal lining 6 adjacent to the closed end 3 and an expansion cone 11 fitted thereto at the open end 5. The lining 6 is made of REFRASIL (Trade Mark) silica fibres bonded with resin into a mat. The novel insert component comprises a graphite nozzle insert 13 fitted between the lining 6 and the expansion cone 11 on the inside wall of the combustion chamber. The insert 13 provides a restricted internal surface diameter to enhance the usual propulsion effect provided by combustion of the bipropellant.

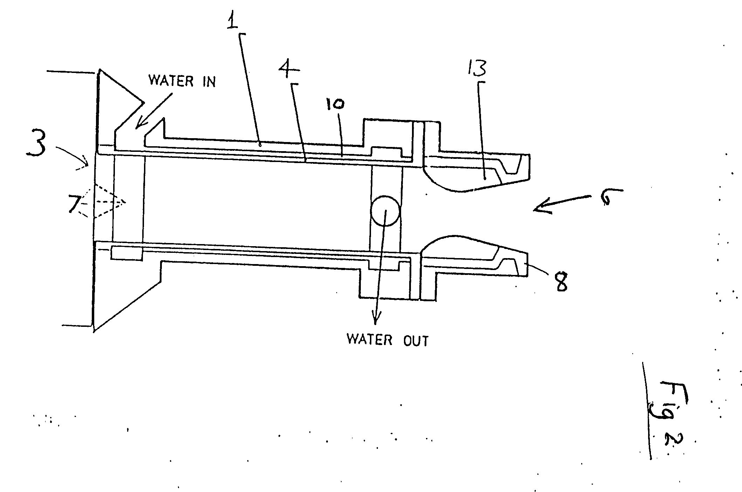

Figure 2 illustrates an alternative combustion chamber construction in which a variety of insert components embodying the invention have been demonstrated. The construction again comprises a metal casing 1 having a closed end 3 having an injector 7 and an open end 5 with a nozzle insert 13 fitted in the inner wall of the chamber. However, in this case the casing has an aluminium lining 4, a short expansion cone 8 (instead of the large expansion cone 11 in Figure 1) and a water cooling channel 10 between the casing 1 and lining 4.

Insert components embodying the invention were made and demonstrated in the constructions shown in Figures 1 and 2 as follows.

Programme 1 as follows describes the production and investigation by use of various nozzle inserts embodying the invention made from converted graphite. Programme 2 describes the use of converted carbon-carbon composites for use as insert components embodying the invention.


## PROGRAMME 1

Nozzle inserts were prepared by the application to graphite substrates (that had previously been machined to the desired contour) of the process described in US Patent No. 875693 herein described as "Process A", described in the following reference: "The Performance of siliconised graphite as a mating face in mechanical scales", ASLE Preprint No. 76-AM-6B-3, by Paxton, R. R., Massaro, A. J., Strugala, E. W., of the Pure Carbon Co., St. Mary's Pennsylvania, which was a paper read at the 31st Annual Meeting of the American Society of Lubricating Engineers, Philadelphia, Pennsylvania, May 10th-13th, 1976.

Process A is a technique for converting the surface layers of carbon to $\beta$-silicon carbide, up to a depth of 5 mm. Typical properties of silicon carbide formed by this technique are listed in Table 1 as follows.

## TABLE 1

### Properties of silicon carbide

### formed by Process A

| | |
|---|---|
| Chemical composition | 96% β SiC |
| Transverse breaking strength | 85 MN m$^{-2}$ |
| Apparent specific density | 3.1 g cm$^{-3}$ |
| Bulk density | 2.3 g cm$^{-3}$ |
| Apparent porosity | 15–30% depending on substrate |
| Thermal conductivity | 0.04 cal cm$^{-1}$/sec °C |
| Youngs modulus | 50 GN m$^{-2}$ |
| Resistivity at 800°C | 0.05 ohm cm |
| Hardness (Mohs scale) | 9.5 |
| Coefficient of thermal expansion | 4 x 10$^{-6}$/°C |
| Thermal shock parameter (kS/Ea) | 17 cal cm$^{-1}$ sec |

In Process A the components are contained in a reaction vessel at a temperature in the region of 1700°C-1900°C, e.g. 1800°C, above a mixture of silicon carbide and silica. At this temperature a silicon monoxide atmosphere is created and the following general reaction takes place

SiO + 2C SiC + CO

Because the components are in contact with vapour only during the period of conversion, the quality of surface finish remains unaffected by the process.

Unconverted nozzle inserts were of two sizes, 32 mm and 51 mm at the throat (minimum internal diameter), to match various injectors and valves of the rocket combustion chamber already available. Two alternative susstrate materials were used, Le Carbone grade P5890 (Trade Mark) and Union Carbide grade ATJ (Trade Mark). Nozzle inserts were assembled as either complete combustion chamber and nozzle assemblies incorporating ablative REFRASIL (Trade Mark) linings as shown in Fig. 1 or flanged nozzle assemblies that could be used with either water cooled combustion chambers (Fig. 2), or ablatively cooled combustion chambers. A list of test components used in Programme 1 is shown in Table 2 as follows.

## TABLE 2
### Summary of test components, excluding valves and injectors used in Programme 1

| Component | Description | SiC depth mm | Throat size mm | Substrate |
|---|---|---|---|---|
| A | Flanged nozzle assembly | 0.8 | 32 | P5890 |
| B | Refrasil lined chamber + nozzle assembly | 0.8 | 32 | P5890 |
| C | Refrasil lined chamber + nozzle assembly | NIL | 51 | P5890 |
| D ** | Refrasil lined chamber + nozzle assembly | 1.8 | 51 | ATJ |
| E | Refrasil lined chamber + nozzle assembly | 1.8 | 51 | ATJ |
| F | Refrasil lined chamber + nozzle assembly | NIL | 51 | ATJ |
| G * | Flanged nozzle assembly | 2.0 | 51 | ATJ |
| H * | Flanged nozzle assembly | 2.0 | 51 | ATJ |
| I o | Refrasil lined chamber + nozzle assembly | 1.8 | 51 | ATJ |
| J | Refrasil lined chamber + nozzle assembly | 2.0 | 32 | ATJ |
| K | Flanged nozzle assembly | 2.0 | 32 | ATJ |
| L | Refrasil lined chamber | | | |
| M | Water cooled chamber to fit 32 mm throat diameter flanged nozzle assemblies | | | |
| N | Water cooled chamber to fit 51 mm throat diameter flanged nozzle assemblies | | | |

** Also manufactured with a 1.3 mm SiC depth
* G - graphite grain along engine axis
   H - graphite grain normal to engine axis
o Salvage of E

In the case of the water cooled combustion chamber it was envisaged that a means of eliminating the erosive action of molten silica might prove informative in study of the resistance to oxidation of the silicon carbide surface.

Programme 1 Test Conditions

The propellant used was the known composition IRFNA-MAF-1 which comprises the following two components:

(a) IRFNA (inhibited red fuming nitric acid):

$HNO_3$ 83%
dinitrogen tetroxide 14%
water 2.5%
hydrofluoric acid 0.5%

5

(b) MAF-1 (mixed amine fuel-1):

unsymmetrical dimethyl hydrazine 40.5%

acetonitrile 9.0%

diethylene triamine 50.5%

These components were used in the parts by weight ratios of about 3.3:1 (IRFNA:MAF-1) or 4.0:1 (IRFNA:MAF-1) as described below.

The environmental conditions existing in the combustion chamber and nozzle region were evaluated theoretically as an aid to interpretation of experimental results. For a combustion chamber pressure 4.5 MN $m^{-2}$ and for the known propellant combination of IRFNA and MAF-1 at various mixture compositions (herein called the "mixture ratios") the relevant thermodynamic data were fitted into both the RO Westcott rocket performance computer program 6EL and the NASA computer program NASA-SP-273 which are based on theoretical models known to those in the art. Agreement between the results from each was good, with the single exception of a number of halogen containing species in the combustion products, which was not considered in the RO Westcott programme. The data reproduced in Table 3 below shows the conditions calculated from the NASA-SP-273 programme for the stated mixture ratios and pressures. The sole halogen containing species (HF) represents only one half of one per cent of the total combustion product mixture. In considering Table 3 it should also be noted that for ablatively cooled combustion chambers, quantities of molten silica and pyrolysed resin also pass through the nozzle.

### TABLE 3

**Test conditions obtaining in IRFNA-MAF 1 fuelled rocket engines at a combustion pressure of 4.5 MN $m^{-2}$ and at equilibrium composition**

| | IRFNA:MAF1 Mixture Ratios | | | | | | | |
|---|---|---|---|---|---|---|---|---|
| | 3.0:1 | | 3.3:1 * | | 3.6:1 ** | | 4.0:1 ** | |
| | Chamber | Throat | Chamber | Throat | Chamber | Throat | Chamber | Throat |
| Pressure (MN $m^{-2}$) | 4.50 | 2.59 | 4.50 | 2.60 | 4.50 | 2.60 | 4.50 | 2.60 |
| Temp ($^\circ$K) | 3058 | 2877 | 3068 | 2905 | 3040 | 2880 | 2972 | 2805 |
| Main Species Present | Mole Fraction | | | | | | | |
| CO | 0.097 | 0.090 | 0.070 | 0.062 | 0.050 | 0.040 | 0.030 | 0.022 |
| $CO_2$ | 0.127 | 0.135 | 0.143 | 0.154 | 0.154 | 0.166 | 0.161 | 0.171 |
| H | 0.006 | 0.004 | 0.005 | 0.004 | 0.004 | 0.003 | 0.002 | 0.002 |
| HF | 0.004 | 0.005 | 0.005 | 0.005 | 0.005 | 0.005 | 0.005 | 0.005 |
| $H_2$ | 0.048 | 0.045 | 0.030 | 0.027 | 0.020 | 0.017 | 0.012 | 0.009 |
| $H_2O$ | 0.452 | 0.464 | 0.458 | 0.470 | 0.457 | 0.469 | 0.452 | 0.463 |
| NO | 0.005 | 0.003 | 0.008 | 0.006 | 0.011 | 0.009 | 0.013 | 0.011 |
| $N_2$ | 0.233 | 0.236 | 0.235 | 0.238 | 0.236 | 0.239 | 0.236 | 0.240 |
| O | 0.002 | 0.001 | 0.003 | 0.002 | 0.003 | 0.002 | 0.004 | 0.002 |
| OH | 0.020 | 0.014 | 0.026 | 0.020 | 0.029 | 0.023 | 0.029 | 0.023 |
| $O_2$ | 0.006 | 0.004 | 0.000 | 0.000 | 0.000 | 0.000 | 0.000 | 0.000 |

\* A mixture ratio of 3.3:1 was the nominal test condition

\*\* Firings carried out under oxidant rich conditions had mixture ratios of 4.0 ± 0.3:1

Programme 1 Test Results and Discussion

The results of test firings obtained with the specimens listed in Table 2 are shown in Table 4 below. To facilitate a cohesive analysis of these results it is necessary to draw them together into groups, where each group has the minimum number of variables. The format of Table 4 reflects this need.

7

<div align="center">

TABLE 4 (Part A)

Process A nozzle insert test summary

</div>

| Test No | Component Types | Substrate | SiC Depth (mm) | Throat Size (mm) | Chamber Cooling |
|---|---|---|---|---|---|
| 3007 | C | P5890 | NIL | 51 | Ablative |
| 293 | B | P5890 | 0.8 | 32 | Ablative |
| 294 | B | P5890 | 0.8 | 32 | Ablative |
| 295 | A + M | P5890 | 0.8 | 32 | Water (Convective) |
| 296 | A + M | P5890 | 0.8 | 32 | Water (Convective) |
| 1004 | F + M | ATJ | NIL | 32 | Water (Convective) |
| 1012 | D | ATJ | 1.4 | 51 | Ablative |
| 3012 | D | ATJ | 1.3 | 51 | Ablative |
| 1005 | K + M | ATJ | 1.25 | 32 | Water (Convective) |
| 1006 | K + M | ATJ | 1.25 | 32 | Water (Convective) |
| 1008 | K + M | ATJ | 1.25 | 32 | Water (Convective) |
| 1009 | K + M | ATJ | 1.25 | 32 | Water (Convective) |
| 365 | D | ATJ | 1.7 | 51 | Ablative |
| 366 | D | ATJ | 1.8 | 51 | Ablative |
| 367 | E | ATJ | 2.0 | 51 | Ablative |
| 368 | E | ATJ | 1.8 | 51 | Ablative |
| 1095 | J | ATJ | 2.0 | 32 | Ablative |
| 1096 | J | ATJ | 2.0 | 32 | Ablative |
| 1097 | J | ATJ | 2.0 | 32 | Ablative |
| 1107 | J | ATJ | 2.0 | 32 | Ablative |
| 1041* | G + N | ATJ | 2.0 | 51 | Water (Convective) |
| 1042* | G + N | ATJ | 2.0 | 51 | Water (Convective) |
| 1043* | G + N | ATJ | 2.0 | 51 | Water (Convective) |
| 1044* | G + N | ATJ | 2.0 | 51 | Water (Convective) |
| 1045* | G + N | ATJ | 2.0 | 51 | Water (Convective) |
| 1046* | G + N | ATJ | 2.0 | 51 | Water (Convective) |
| 1047* | H + N | ATJ | 2.0 | 51 | Water (Convective) |
| 1069 | H + N | ATJ | 2.0 | 51 | Water (Convective) |
| 1039* | D | ATJ | 1.8 | 51 | Ablative |
| 1040* | D | ATJ | 1.8 | 51 | Ablative |
| 1056* | D | ATJ | 1.8 | 51 | Ablative |
| 1067 | I | ATJ | 2.0 | 51 | Ablative |
| 1068 | H + N | ATJ | 2.0 | 51 | Water (Convective) |
| 1104 | J | ATJ | 2.0 | 32 | Ablative |
| 1106 | J | ATJ | 2.0 | 32 | Ablative |

* Denotes firings were oxidant rich; mixture ratio $4.0 \pm 0.3:1$.
  All other firings: mixture ratio $3.3 \pm 0.1:1$

## TABLE 4 (Part B)
### Process A nozzle insert test summary

| Test No. | Duration (s) | Erosion/Oxidation at One Surface |
|---|---|---|
| 3007 | 10 | Very severe: 3.7 mm at throat |
| 293 | 0.75 | NIL |
| 294 | 10 | Severe (2.2 mm) in subsonic region and at throat |
| 295 | 10 | Severe (2.5 mm) in subsonic region and at throat |
| 296 | 6 | Slight pitting at leading edge of subsonic region |
| 1004 | 2.6 | Moderate (1.2 mm) |
| 1012 | 12 | SiC layer just penetrated in a few areas in sub-sonic region |
| 3012 | 20 | Locally very severe in deep channels |
| 1005 | 15 | Moderate: SiC layer just penetrated in two areas in sub-sonic region |
| 1006 | 20 | Moderate: SiC layer almost completely removed in sub-sonic and throat region |
| 1008 | 25 | Locally severe ( 3.0 mm) mainly in subsonic region |
| 1009 | 30 | Locally very severe (8 mm) in subsonic, throat and supersonic regions |
| 365 | 5 | NIL |
| 366 | 8 | NIL |
| 367 | 15 | NIL |
| 368 | 2 on 15 off 3 on | NIL |
| 1095 | 10 | Slight roughening of SiC surface |
| 1096 | 20 | Severe: coating all removed in subsonic region + slight erosion of graphite in places |

TABLE 4 (Part B) -- continued
Process A nozzle insert test summary

| Test No. | Duration (s) | Erosion/Oxidation at One Surface |
|---|---|---|
| 1097. | 30 | Very severe: coating removed over most of surface<br>Graphite erosion  9 mm locally |
| 1107 | 30 | Very severe: damage similar to previous firing |
| 1041* | 5 | 2 small cracks, subsonic and supersonic regions |
| 1042* | 10 | NIL |
| 1043* | 15 | Localised discolouration and roughening of SiC surface, 4 locations |
| 1044* | 20 | Very severe damage (9 mm) at one point only |
| 1045* | 25 | Localised discolouration and roughening of SiC surface, 4 locations |
| 1046* | 30 | Localised discolouration and roughening of Sic surface.  Minor decontamination procedure damage |
| 1047* | 60 | Very slight oxidation in subsonic region + circumferential crack |
| 1069 | 16.9 | Very severe ( 10 mm) 2 locations.  In one location SiC spalled from graphite 16.9 s into 30 s run |
| 1039* | 5 on 5 off<br>5 on | NIL |
| 1040* | 10 on 5 off<br>10 on | Minor surface roughening only |
| 1056* | 3.8 | NIL |
| 1067 | 1 on 1 off<br>3 on 1 off<br>4 on | Very severe (12 mm), one position SiC spalled |
| 1068 | 1 on 1 off<br>3 on 1 off<br>4 on | Very severe, up to 7 mm depth in 3 locations |

TABLE 4 (Part B) -- continued
Process A nozzle insert test summary

| Test No. | Duration (s) | Erosion/Oxidation at One Surface |
|---|---|---|
| 1104 | 1 on 3 off<br>2 on 5 off<br>5 on | NIL |
| 1106 | 1 on 3 off<br>2 on 5 off<br>5 on | NIL |

\* Represents oxidant rich conditions (mixture ratio 4.0 ± 0.3:1).
  All other firings were with a mixture ratio of 3.3 ± 0.1:1

### Converted vs unconverted P5890 (Firings 293 to 296, 3007)

Firings 293-295 reveal that the conversion of 0.8 mm of the surface provided an improvement in resistance to attack for a few seconds, with eventual failure of the SiC layer leading to a resumption in the rapid erosion of graphite in the throat and subsonic regions.

Instead of the often observed cracking and spalling associated with test firings of graphite nozzles having SiC layers formed by conventional techniques, the surface layer appeared to have failed in an alternative way. In the 6 second firing for example, damage was confined to small pits ( 1 mm$^2$) at the leading edge of the nozzle subsonic region. In these pits the surface layer had in many cases been completely removed. Around the pits were found small quantities of silica (that could have come only from oxidation of the SiC, as the combustion chamber was water cooled). Although the silica may have formed during cooling of the nozzle from approximately 2700°C after the firing, the presence of pits is indicative of a localised sublimation/decomposition/oxidation process occurring during the firing. The localised nature of the degradation can be attributed to the porous nature of the SiC layer, which would allow more rapid attack in regions containing high proportions of connected pores.

The difference in amount of SiC and graphite removed in 10 second firings using water cooled and ablatively cooled combustion chambers was small (0.3 mm) from which it can be inferred that the time at which the SiC layer was completely removed in the subsonic region of nozzles was similar in both cases. Actual depths of graphite erosion are commensurate with failure of the SiC layer at approximately 6 seconds.

Survival of the SiC layer in the supersonic region of all nozzles, where gas temperatures decrease by 500-1000°C suggests that temperature is a key determinant of the tendency for the SiC layer to be attacked rapidly. This reinforces the concept of a failure mechanism involving sublimation and/or decomposition of SiC at high temperatures.

### ATJ substrate with various depths of SiC conversion (Firings 1004, 1012, 3012, 1005-1009, 365-368, 1095-1097, 1107)

Having established that Process A converted nozzles using P5890 substrate were capable of affording an increase in resistance to oxidation and erosion over the first few seconds of use, it was envisaged that thicker conversions might improve the time interval over which the SiC layer survived. To facilitate the conversion of carbon to a depth of approximately 2 mm in a controlled manner, with acceptable conversion time, it was necessary to use an alternative substrate material. Ultimately Union Carbide ATJ grade was chosen on the basis of its density/porosity characteristics and hence its ease of conversion of SiC in the manner required.

It was known from previous test firings with low density graphites that unconverted graphite material removal rate greater than 0.3 mm per second would be expected for the conditions used. An observed rate of 0.46 mm s$^{-1}$ in the "control" firing exceeded this value by a significant margin, indicating that ATJ would have little merit if used in an uncoated form where long firing times were called for.

For a SiC Layer thickness of 1.3 mm the firing time to local failure of the layer in a Refrasil lined, ablatively cooled combustion chamber assembly was approximately double that obtained with 0.8 mm layers on P5890 (12 s compared with 6 s). Increasing the firing time further (firing 3012) revealed a tendency for the material removal to take place in channels rather than evenly around the circumference. For this particular type of component therefore the time to failure per mm depth of conversion was broadly similar to that obtained with the layer formed on P5890 substrate. This degree of improvement was unexpected in view of the higher porosity of the SiC layer formed on ATJ which it was suspected would reduce its protective qualities.

Change to a smaller diameter nozzle, used with a water cooled combustion chamber (firings 1005-9) led to a longer lifetime to failure for a 1.25 mm layer thickness, of the order of 15 seconds. This can be attributed to the combination of slightly cooler boundary layer in the nozzle and absence of the erosive action of molten SiO$_2$.

In all of the tests so far described it appeared that chemical oxidation of the coating at high temperature was the initial failure mode. Following this, both oxidation and physical erosion of the carbon substrate beneath the revealed edges of SiC led to more rapid removal of both materials around the region of initial failure.

The indication from firings 365-368 was that the resistance to attack in the nozzles of ablatively cooled engines afforded by SiC layers in the region of 1.25 mm thick could be improved through additional increase in the SiC depth to approximately 2.0 mm. the absence here of any appreciable sign of wear, for all firing times, suggests that a lifetime of at least 15 seconds can be expected of such a layer under the conditions used. This suggestion is reinforced by the results of firings 1095-1097 and 1107, where inserts with 2.0 mm SiC layers tested for periods of 10, 20 and 30 seconds in ablatively cooled engines were observed to fail at some time within the 10 to 20 second time interval.

### ATJ substrate; 2 mm conversion depth, oxidant rich conditions (Firings 1039-1047, 1067-1069, 1104-1106)

In this series of firings, the majority of firings were oxidant rich and the combustion mixture cooler than in previous firings (as would be evident from Table 3). In addition, the proportion of oxidising species in the combustion mixture was greater than before.

The results nevertheless proved informative in that nozzle inserts were generally undamaged, even after firing durations more than double those used previously. This provided an indication of the usefulness of the Process A converted nozzle inserts in engines having long duration firing duty cycles and where boundary layer conditions could be tailored to off-nominal mixture ratio conditions.

In test firings 1041-1047, using a water cooled combustion chamber, attempts were made to assess the importance of graphite grain direction on converted layer durability. Grain in this context is taken to mean the plane along which the sheets of hexagonally arranged carbon atoms lie. All six nozzle assemblies having the graphite grain in the nozzle lying along the axis of the engine were fired, with only one failure (firing 1044). In this case the nozzle failed gradually from 8 seconds onwards, and examination revealed the emergence of spalling. In view of the fact that two additional nozzles of identical construction survived intact after firing times of 25 to 30 seconds it is likely that the converted layer on the nozzle in firing 1044 was either cracked before the test or subject to a hidden defect and thus liable to premature failure.

Having exhausted the supply of test components of this type without observing the emergence of the usual failure mode, it was considered appropriate for the first test of a nozzle having the graphite grain normal to the engine axis to be particularly severe. Surprisingly a firing time of 60 seconds resulted in the survival of the SiC layer, with the only damage apparent being a single circumferential crack in the subsonic region together with a very small amount of oxidation, evident from the existence of $SiO_2$ on the SiC surface. As this was the only occasion in which a crack was observed to follow a circumferential path the result indicates clearly that where cracking can occur the crack direction is influenced by substrate grain direction.

Throughout the tests associated with grain direction very little evidence emerged of oxidation of the SiC layers despite the unusually high quantity of oxidising species present in the combustion mixture. When considered along with the slightly lower combustion temperatures associated with these firings (eg, chamber and throat temperatures of 2972°K and 2805°K respectively at a mixture ratio of 4.0:1, cf 3068°K and 2905°K for a mixture ratio of 3.3:1) the results suggest the following: The mechanism for the rapid degradation of SiC in rocket combustion component applications is one in which the rate determining step is a process that occurs at appreciable rates at temperatures in excess of 2972°K (2700°C approximately).

Further evidence for a failure mechanism incorporating such a rate determining step is found in a comparison of the results from firings 1047 and 1069 (oxidant rich and nominal mixture ratio 4.0:1 respectively). Here the higher temperatures of the latter led to an ability to survive for only 17 seconds, compared with 60 seconds in the former case, for identical test components.

Firings 1093, 1040, 1056, 1067, 1068, 1104 and 1106 were directed at a comparison of the ability of SiC layers to withstand steady state pulsed duty cycles (on/off fuel supply cycles). The results indicate that duty cycles involving two pulses were within the capabilities of a 2.0 mm SiC layer, there being no damage following 5 on-5 off-5 on and 10 on-5 off-10 on cycles (times in seconds). The imposition of a single 38 second firing (1056) revealed that the SiC layer was capable of withstanding long total firing times in ablatively cooled assemblies, confirming also that durability of nozzles fired under oxidant rich conditions was not a function of cooling. On introduction of a third pulse into a higher frequency duty cycle however (firing 1067) it was clear that the limits of the SiC had been reached, with failure at the beginning of the third pulse after only four seconds total "on time". In this case it was apparent that there had been spalling of the SiC and possibly also graphite, with a depth of substrate attack in this region of 12 mm. A repeat of the test, this time with a water cooled combustion chamber to eliminate the effect of molten $SiO_2$ produced the same type of result, with failure at the start of the third pulse leading in this case to 3 regions of attack.

It is apparent therefore that SiC layers formed by conversion from graphite remain subject to some degree to the limitations on thermal cycling normally associated with SiC layers formed on graphite by conventional means.

To assess the effect of frequency of pulsing on the tendency of the SiC layer to crack and spall, two final firings (1104 and 1106) were carried out with longer off intervals. The survival of both nozzles intact indicated that in some way the SiC layer was better able to resist the induced thermal shock effects. It is possible that by allowing time for thermal conduction to the substrate to raise the substrate temperature in the interface region this could have reduced thermal expansion mismatch between materials during the particularly high stress periods at engine start up.


Programme 1 Conclusions

Nozzle inserts produced from Process A converted graphite

The following conclusions can be drawn from the use of the components listed in Table 3 in the constructions shown in Figure 1 or 2 giving the results described quantitatively in Table 4.

1. Graphite nozzles having their surface layers converted to SiC offer a low cost solution to the problem of high erosion rates found with graphite nozzles, especially for single burn durations up to 15 seconds.

2. In rocket nozzle applications SiC layers formed by conversion of graphite have less tendency to spall during firing as a result of thermal shock effects than SiC layers deposited on graphite surfaces by conventional means. They remain subject to thermal shock effects during rapid pulsing however.

3. Substrate material has little effect on the durability per mm depth of conversion to SiC, although grain direction does influence the direction of cracks in SiC layers should they appear.

4. The most plausible mechanism for rapid attack of SiC in nozzles (other than by thermal shock effects) is one that includes sublimation and decomposition of SiC as the rate determining step at temperatures above about 2700°C.

An engine in which the boundary conditions are cooler and less oxidising than those described above can provide prolongation of the life of the Procss A converted SiC layer such that it is suitable for use in an engine having a lifetime of minutes rather than seconds. Such conditions may be obtained by injecting fuel along the walls of the combustion chamber in the manner described by Berman, K., and Andrysiak, S. J., in the article entitled "Barrier Film Cooling Study", J. Spacecraft, Vol. 9, No. 3, March 1972.

## PROGRAMME 2

### Process A Conversion of Carbon-Carbon Composites

Following on from the results obtained from test firings obtained with Process A converted nozzle inserts a study was initiated to investigate the conversion of carbon-carbon composite structures in a controlled manner.

### Programme 2 Test Components

A number of 6" (152 mm) x 4" (102 mm) flat test boards approximately 1/10" (2.5 mm) thick, together with rosette lay up expansion cones, based on an existing solid motor design, were manufactured using compression moulding tools from G2206 (Trade Mark) rayon fabric obtained from Hitco, USA, impregnated with polyphenylene resin HA43 (Trade Mark) obtained from Hercules Inc. The boards and cones were then carbonised by pyrolysis in a nitrogen atmosphere at about 1000°C for 745 hours, following which conversion of the surfaces was carried out in the manner summarised in Table 5 by Process A described above.

TABLE 5
Carbon-carbon test component conversion programme
(Programme 2)

| Time (mins) | Temperature (°C) | | |
| --- | --- | --- | --- |
| | 1650 | 1750 | 1850 |
| 0 ‡ | * | * | * |
| 5 | | | * |
| 15 | * | * | * |
| 30 | * | * | * |
| 60 | * | | |

‡ Time refers to time at temperature. 0 therefore equals raise to temperature and then switch off.

### Programme 2 Testing

Conversion depths were determined by sectioning samples and placing them in an air atmosphere for 1 hour at 1000°C. At this temperature the graphite and carbon were partly oxidised whilst the SiC remained unattacked, permitting precise measurement of the conversion depth. The results are shown in Table 6 as follows.

TABLE 6
Programme 2 results

| Run No. | Temp (°C) | Time at Temp (mins) | Thickness (mm) | | Conversion Depth (%t) | | Board Flexural Strength ($N\ mm^{-2}$) |
|---|---|---|---|---|---|---|---|
| | | | Board | Cone | Board | Cone | |
| 1 | – | – | 2.0 | 3.22 | 0 | 0 | 95 |
| 9 | 1650 | 0 | 2.23 | 2.82 | 0 | 0 | 63 |
| 8 | 1650 | 15 | 2.41 | 3.07 | 0 | 100 | 20 |
| 7 | 1650 | 30 | 2.21 | 3.17 | 20 | 20 | 41 |
| 6 | 1650 | 60 | 2.31 | 3.38 | 100 | 100 | 45 |
| 10 | 1750 | 0 | 2.28 | 2.79 | 33 | 50 | 32 |
| 5 | 1750 | 15 | 2.23 | 2.77 | 30 | 25 | 30 |
| 4 | 1750 | 30 | 2.34 | 2.84 | 75 | 100 | 88 |
| 11 | 1850 | 0 | 2.26 | 3.15 | 44 | 100 | 14 |
| 12 | 1850 | 5 | 2.28 | 2.99 | 70 | 100 | 73 |
| 3 | 1850 | 15 | 2.34 | 2.87 | 78 | 100 | 75 |
| 2 | 1850 | 30 | 2.28 | 3.22 | 70 | 100 | 41 |

The cones were used to demonstrate the Process A conversion of carbon-carbon rocket combustion chamber components whereas the boards were used to demonstrate the effect on flexural strength of Process A conversion of carbon-carbon composites. The flexural strength measurement apparatus could only be used with flat samples.

The highly porous nature of carbon-carbon matrixes subjected to single step densification procedures makes the material ideal for rapid conversion to SiC by Process A. This readiness to convert emerged as a major characteristic of components tested, with 6 out of the 11 components becoming converted through their entire thickness.

The results in Table 6 show in particular that 1650°C is the lowest practical temperature at which conversion can take place since the depths obtained were inconsistent with treatment time at that temperature. At temperatures of 1850°C however, conversion was, as expected, very rapid, with 70% conversion within 5 minutes. A greater level of control would appear to be available at a temperature of 1750°C, with depths ranging to 80% after 30 minutes treatment at that temperature.

The difference in depths of conversion obtained for boards and cones can be attributed to a more efficient moulding, affording denser components in the former case. Measured densities were 1.36 mg $m^{-3}$ and 1.31 mg $m^{-3}$ for boards and cones respectively.

Flexural strength measurements revealed that all conversion treatments resulted in reductions in the value for this property, and although there was little correlation between conversion time and flexural strength, it did appear that some recovery did occur after initial large reductions. There was an indication that the best strength recovery occurred at approximately 70% to 80% conversion depth (i.e. 70% to 80% of the thickness converted by Process A).

The Process A converted expansion cones may be used in a rocket engine construction (i.e. as the cone 11) shown in Figure 1 and provide improved erosion resistance as described above.

The nozzle inserts 13 used in the respective constructions shown in Figures 1 and 2 may also be made from Process A converted carbon-carbon composites produced in the same manner as the expansion cones described above (with reference to Tables 5 and 6).

### Claims

1. A method of producing an insert for the thrust chamber assembly of a rocket engine which comprises forming an insert component comprising a carbon containing material and chemically converting the carbon of the said component into silicon carbide in at least the region of the said component which forms the inner wall of the thrust chamber assembly of the engine when the assembly is located in the engine.

2. A method as claimed in claim 1 and wherein the insert component prior to conversion comprises graphite.

3. A method as claimed in claim 1 and wherein the insert component prior to conversion comprises a carbon-carbon composite.

4. A method as claimed in claim 1 and wherein the carbon is converted into silicon carbide by heating in an atmosphere of silicon monoxide.

5. A method as claimed in claim 1 and wherein prior to said chemical conversion said insert component comprises a carbon-carbon composite and 50 to 90 per cent by volume of said composite is converted to silicon carbide.

6. A method as claimed in claim 5 and wherein prior to said chemical conversion said insert component comprises a carbon-carbon composite and 70 to 80 per cent by volume of said composite is converted to silicon carbide.

7. An insert component for the thrust chamber assembly of a rocket engine which comprises a region of silicon carbide in at least the region of the said component which forms the inner wall of the thrust chamber assembly when the assembly is located in the engine which region has been formed by chemical conversion of carbon in said region.

8. An insert component as claimed in claim 7 and wherein the depth of the layer of said insert which is converted into silicon carbide is in the range 0.5mm to 5mm.

9. An insert component as claimed in claim 7 and which comprises a combustion chamber lining.

10. An insert component as claimed in claim 7 and which comprises a thrust nozzle lining.

11. An insert component as claimed in claim 7 and which comprises an expansion cone.

12. A rocket motor in which propellant is arranged to burn at a temperature in the range 2350°C to 2700°C, the thrust chamber assembly of said rocket motor comprising an insert component as claimed in claim 7.

Fig. 1

Fig 2